# EUROPEAN PATENT APPLICATION

(11) **EP 2 568 524 A2**
(43) Date of publication of application: **13.03.2013**
(21) Application number: 12181276.2
(22) Date of filing: 22.08.2012
(51) Int. Cl.: H01M 8/10, C08J 5/22, H01B 1/12

(54) **Electrolyte material, and proton conductive polymer electrolyte membrane, membrane electrode assembly and polymer electrolyte fuel cell using the same**

(30) Priority: 07.09.2011 JP 2011194642
(71) Applicant: Hitachi Ltd., Tokyo 100-8280 (JP)
(72) Inventor: Onuma, Atsuhiko, Tokyo 100-8220 (JP); Morishima, Makoto, Tokyo 100-8220 (JP); Mori, Hideharu, Yonezawa-shi Yamagata 992-8510 (JP)
(74) Representative: Beetz & Partner

(57) **Abstract**

Disclosed is an electrolyte material containing a copolymer including a polyvinyl as a main chain, the copolymer including a functional group with proton conductivity; and an alkoxide of Si or Ti as a side chain. By using the electrolyte material, a proton conductive polymer electrolyte membrane with flexibility, high ion conductivity, excellent water resistance, and a small change in size can be obtained. And a polymer electrolyte fuel cell can be provided which has high output and durability by using the electrolyte membrane.

## Description

### TECHNICAL FIELD:

The present invention relates to electrolyte materials, and a proton conductive polymer electrolyte membrane, a membrane electrode assembly and a polymer electrolyte fuel cell using the same.

### BACKGROUND ART:

Fuel cells have been expected as a power generator for the next-generation that can contribute to solve current big problems including global environmental issues and energy issues because of the high power generation efficiency.

Among the fuel cells, a polymer electrolyte fuel cell has the most compact size and the highest output, as compared to other systems. The polymer electrolyte fuel cell has become the mainstream of new-generation fuel cells of a small on-site type, for a mobile (vehicle-mounted) , for a portable cell phone, and the like.

As a polymer electrolyte membrane for the fuel cell, fluorine polymer electrolyte membranes, for example, "Nafion (registered mark)", "Flemion (registered mark)" and the like are known that have a main chain of a perfluoroalkylene group with an ion exchange group such as a sulfonic group or carboxylic group, attached to the terminal of a perfluoro-vinylether side chain in one part.

However, such fluorine polymer electrolyte membranes are so expensive. When the polymer electrolyte membranes such as "Nafion (registered mark)" for the fuel cells currently used are intended to be utilized on the condition exceeding 100 °C, the water content of the polymer electrolyte membrane is drastically decreased, and the polymer electrolyte membrane is remarkably softened additionally. In a direct methanol fuel cell to be expected in the future, when the related-art fluorine proton conductive polymer material such as "Nafion (registered mark)" is used as an electrolyte, the methanol passing through an anode is diffused into the electrolyte to reach a cathode, and then is directly reacted with an oxidant (O₂) on a cathode catalyst. This arrangement leads to a short-circuiting phenomenon (cross over) to remarkably reduce the battery performance. Thus, the fuel cell cannot disadvantageously exhibit the sufficient performance.

In order to solve the above problems, various polymer electrolyte membranes have been hitherto studied which have a sulfonic group for giving proton conductivity introduced into a heat-resisting aromatic polymer, instead of the fluorine-based film. For example, Patent Document 1 (Japanese Patent Application Laid-Open No. Hei 06-93114), Patent Document 2 (Japanese Patent No. 3861367) and Patent Document 3 (Japanese PatentApplicationLaid-OpenNo. 2001-329053) disclose polymer electrolyte membranes using sulfonated aromatic polyether ketones, sulfonated aromatic polyether sulfones, sulfonated polyphenylenes and the like from the viewpoint of the heat resistance or chemical stability of the polymer electrolyte membrane.

The above hydrocarbon electrolyte membrane, however, is generally known to have the trade-off relationship that the long-term durability is reduced as the ion exchange group composition is increased so as to improve the proton conductivity.

In order to solve the above problem, a block electrolyte polymer has been studied which includes a hydrophilic part containing an ion exchange group, and a hydrophobic part not containing any ion exchange group, as disclosed in Patent Document 4 (Japanese Patent Application Laid-Open No. 2005-112985) and Patent Document 5 (Japanese Patent Application Laid-Open No. 2007-106986).

Patent Document 6 (Japanese Patent Application Laid-Open No. 2011-74196) discloses a proton conductive material having a "-C-Si-C-" structure as a straight chain serving as a backbone of polymers.

### SUMMARY OF THE INVENTION:

An electrolyte material in the present invention contains a polyvinyl copolymer including both a functional group with proton conductivity and an alkoxide of Si or Ti as a side chain.

The present invention can provide a proton conductive polymer electrolyte membrane with high ion conductivity, a small change in size, and an excellent stability in terms of physics.

Further, the present invention can improve the output characteristics of the fuel cell to increase the lifetime of the cell.

### BRIEF DESCRIPTION OF THE DRAWINGS:

Fig. 1 is a ¹H-NMR spectrum chart of a copolymer of vinyl sulfonic acid and triethoxy vinyl silane synthesized.
Fig. 2 is an exploded perspective view showing an inside structure of a compact power generation cell.

### DETAILED DESCRIPTION OF THE PREFERRED EMBODIMENTS:

The present invention relates to a polymer electrolyte membrane (proton conductive polymer electrolyte membrane) at low cost with high ion conductivity, an excellent water resistance, a small change in size in a horizontal direction within a liquid, and an adequate mechanical strength. Further, the present invention relates to a membrane electrode assembly and a polymer electrolyte fuel cell (hereinafter, simply referred to as a "fuel cell") using the same.

Only the use of a polyether sulfonic block copolymer or a polyether ketone block copolymer disclosed in Patent Documents 4 and 5 will exhibit low proton conductivity as compared to the fluorine electrolyte membrane. In order to obtain the good output characteristics, it is necessary to increase the composition (content) of the ion exchange group. However, the increase in content of the ion exchange group induces swelling to largely change the size of the electrolyte membrane, which disadvantageously degrades the long-term durability.

The polymer having the "-C-Si-C-" structure in a straight chain as disclosed in Patent Document 6 becomes fragile in terms of physics. Thus, it is necessary to reduce the Si content.

Accordingly, it is an object of the present invention to produce a proton conductive polymer electrolyte membrane with flexibility, high ion conductivity, an excellent water resistance, and a small change in size. The present invention has another object to provide a polymer electrolyte fuel cell with high output and durability using the electrolyte membrane.

We have developed electrolyte membranes with the high proton conductivity. We have been dedicated themselves to studying so as to achieve the above objects, and found as a result that an electrolyte with high water resistance (hereinafter referred to as "electrolyte material") can be obtained by containing a vinyl alkoxysilane (vinyl silicon alkoxide) or a vinyl titanium alkoxide into a molecular structure. Accordingly, the present invention has been made as described above. The electrolyte membrane with the high water resistance can be manufactured by coating the electrolyte material.

The electrolyte membrane that achieves both the water resistance and the proton conductivity can be obtained by containing sulfonic acid as an ion exchange part for exhibiting the proton conductivity in the molecular structure of the above electrolyte membrane.

Among polymers containing a vinyl alkoxysilane part and a vinyl sulfonic acid part in the molecular structure, especially, an electrolyte containing a block copolymer of a polyvinyl sulfonic acid and a polymer having a covalent bond between a vinyl group and a metal alkoxide which is represented by the following chemical formula (1) has the low swelling property and the high ion conductivity among the electrolytes described above.

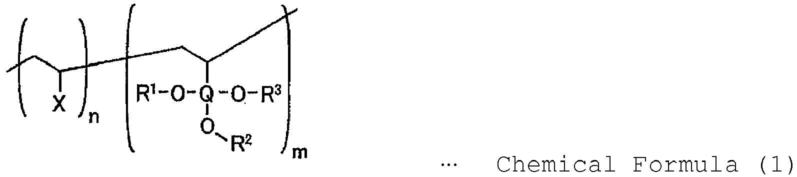

In the above chemical formula (1), X is -SO₃H, -COOH or -PO₃H, and Q is Si or Ti. And, each of R¹, R² and R³ is an alkyl group having a carbon number of 1 to 4 which may be a straight or branched chain, and each of m and n is an integer number.

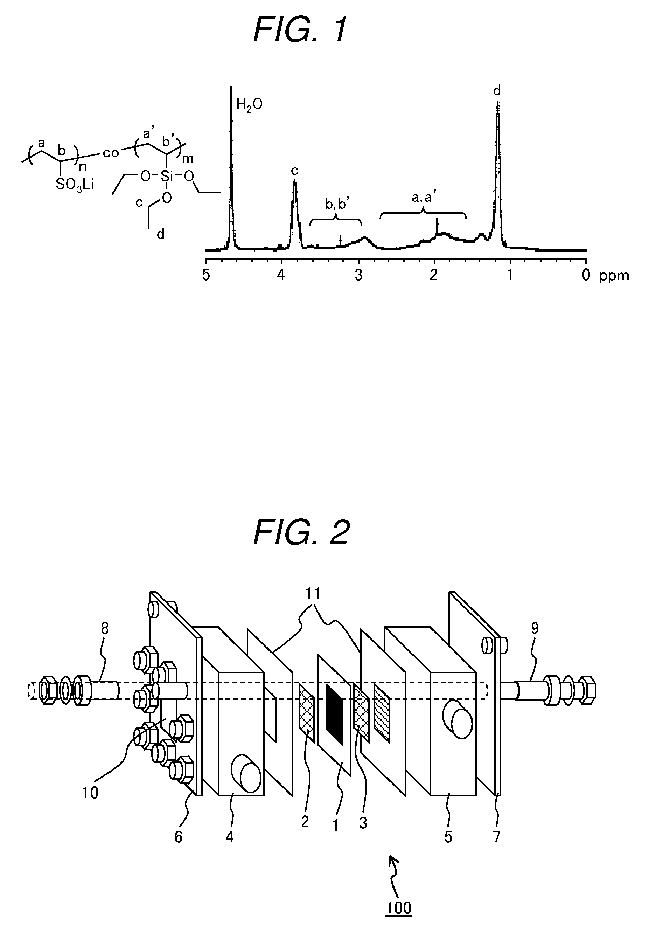

Fig. 1 shows an example of a ¹H-NMR spectrum chart of a copolymer of vinyl sulfonic acid and triethoxy vinyl silane synthesized. On the left side of Fig. 1, the chemical structural formula of the copolymer of interest for measurement is shown.

In the chemical structural formula, "co" means the copolymer, "a" indicates a carbon atom without a functional group among carbon atoms of a vinyl group bonded to a sulfonic acid, "a'" indicates a carbon atom without a functional group among the carbon atoms of a vinyl group bonded to a triethoxysilane, "b" indicates a carbon atom with a functional group among the carbon atoms of the vinyl group bonded to the sulfonic acid, "b"' indicates a carbon atom with a functional group among the carbon atoms of the vinyl group bonded to the triethoxysilane, "c" indicates a carbon atombonded to an oxygen atom among carbon atoms of an ethoxy group, and "d" indicates a carbon atom not bonded to an oxygen atom among the carbon atoms of the ethoxy group.

In the graph shown on the right side of the figure, the "a" and "a'" indicate the same spectrum, and the "b" and "b'" indicate the same spectrum. The "c" and "d" have the respective high peaks.

The above electrolyte having an ion exchange capacity in a range of 1.0 to 3.0 milliequivalent/g (meq/g) has the very excellent proton conductivity.

A polymer porous material such as polyolefine is impregnated with the above electrolyte and then dried, which can produce an electrolyte membrane with the excellent strength.

A nonwoven fabric formed of polyorefine, polyester, aramid, cellulose or the like is impregnated with the above electrolyte, and then dried, which can produce a composite electrolyte membrane with improved tensile strength that suppresses the decrease in ion conductivity.

A membrane electrode assembly can be provided which includes the above electrolyte membrane sandwiched between a cathode catalyst layer for reducing oxidation gas and an anode catalyst layer for oxidizing hydrogen.

A polymer electrolyte fuel cell can be provided which uses the above membrane electrode assembly.

Now, the electrolyte material, and the proton conductive polymer electrolyte membrane, the membrane electrode assembly, and the polymer electrolyte fuel cell using the same according to this embodiment of the present invention will be described below.

The electrolyte material is a poly-vinyl copolymer having a main chain of polyvinyl, and containing a functional group with proton conductivity and an alkoxide made of silicon (Si) or titanium (Ti) as side chains.

In the electrolyte material, the copolymer is desirably represented by the above chemical formula (1).

In the electrolyte material, the copolymer is a block copolymer or a random copolymer.

In the electrolyte material, an ion exchange capacity is desirably in a range of 1.0 to 3.0 milliequivalent/g.

The proton conductive polymer electrolyte membrane is formed of the electrolyte material. That is, the proton conductive polymer electrolyte membrane containing the electrolyte material.

The proton conductive polymer electrolyte membrane is desirably formed by impregnating a polymer porous body with the electrolyte material. That is, the proton conductive polymer electrolyte membrane desirably contains the polymer porous body; and the electrolyte material impregnated into the polymer porous body.

The proton conductive polymer electrolyte membrane is desirably formed by impregnating a nonwoven fabric with the electrolyte material. That is, the proton conductive polymer electrolyte membrane desirably contains the nonwoven fabric; and the electrolyte material impregnated into the nonwoven fabric.

The membrane electrode assembly contains a cathode catalyst layer which reduces an oxidation gas, an anode catalyst layer which oxidizes hydrogen, and the proton conductive polymer electrolyte membrane. The proton conductive polymer electrolyte membrane is interposed between the cathode catalyst layer and the anode catalyst layer.

The polymer electrolyte fuel cell is formed using the proton conductive polymer electrolyte membrane.

Now, the case in which the electrolyte material (ion exchange resin) has an alkoxide of silicon (Si) will be described below in details.

Since the electrolyte material has a main chain of polyvinyl, the term "with an alkoxide of silicon (Si)" means the same as "with a vinyl alkoxysilane in a main chain structure".

Methods for chemically bonding vinyl alkoxysilane to the main chain structure are not particularly limited to specific ones, but may include radical polymerization, ion polymerization, addition polymerization, condensation polymerization and the like. Coating of the electrolyte material can provide the electrolyte membrane for a fuel cell with the proton conductivity, but a coating method thereof is not specifically limited.

The ion exchange groups for exhibiting the proton conductivity should be a cationic ion exchange group, and may include a sulfonic group, a phosphoric group, a carboxylic group and the like. Particularly, the ion exchange group is preferably the sulfonic group. Thus, vinylsulfonic acid derivatives can be used as raw material for introducing sulfonic acid into the molecular structure.

The vinylsulfonic acid derivatives are preferably a vinylsulfonic acid ester which is represented by CH₂=CH-SO₃-R, where R is a hydrocarbon group having a carbon number of 1 to 20, preferably, 4 to 20. Specifically, the hydrocarbon groups are preferably an ethyl group, an n-butyl group, a neopentyl group, a tetrahydrofurfuryl group, a cyclopentyl group, a cyclohexyl group, a cyclohexyl methyl group, an adamantylmentyl group, a by cyclo [2.2.1] heptyl methyl group, and more preferably a neopentyl group. The specific examples of vinylsulfonic acid ether include compounds represented by the following chemical formulas (2) to (20).

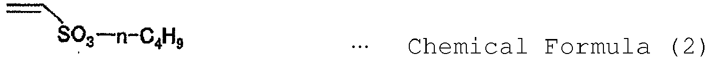

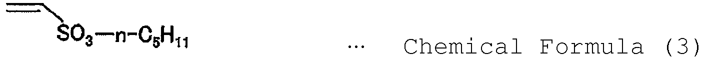

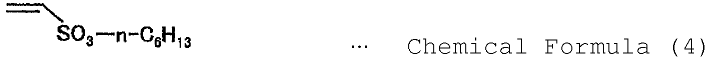

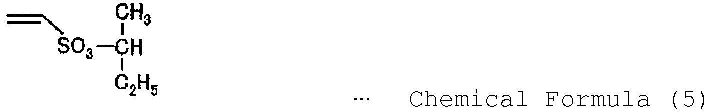

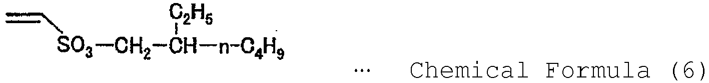

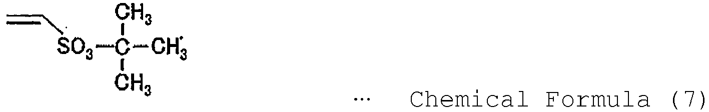

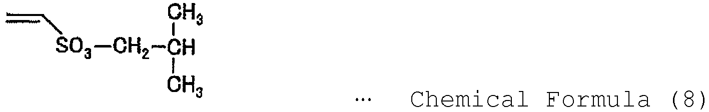

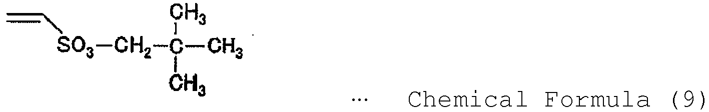

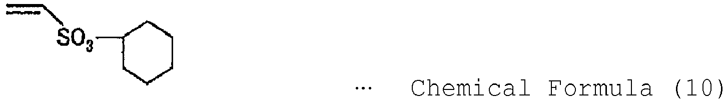

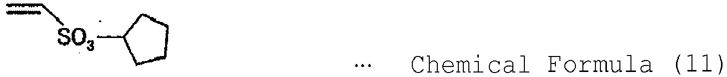

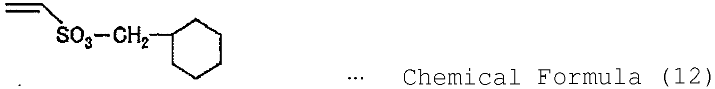

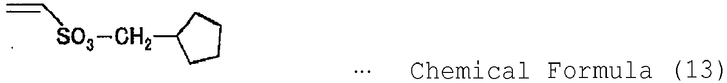

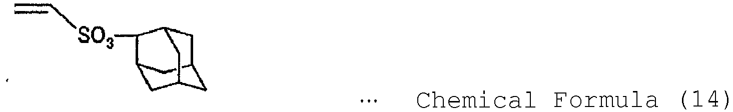

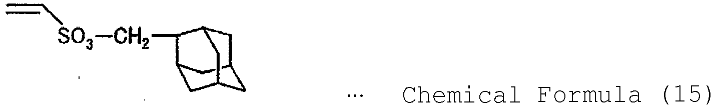

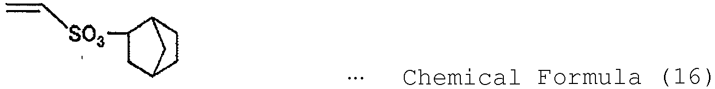

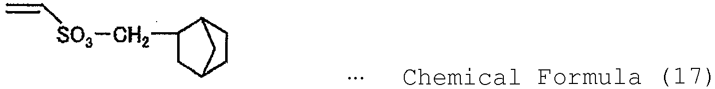

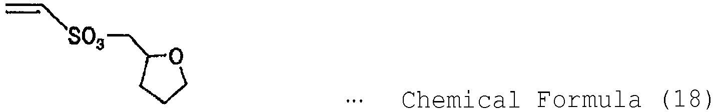

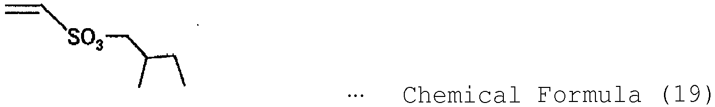

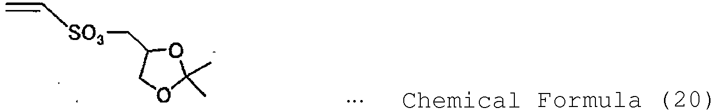

The synthesis of a copolymer of triethoxy vinyl silane and vinyl sulfonic acid is not specifically limited. However, more preferably, the copolymer had better be synthesized using living radical polymerization because the synthesized copolymer has a larger molecule weight.

The problems caused by using living anion polymerization or living cation polymerization involve a terminal reaction or a side reaction occurring under the influence of moisture or oxygen. Upon use of the living anion polymerization or living cation polymerization, the -C-Si-C- structure is formed in the straight chain of the polymer, which makes it difficult to form a functional group containing Si at a side chain of the polymer. Thus, the synthesized polymer tends to have its mechanical strength decreased, and to become fragile. In this case, the Si content needs to be suppressed so as to keep the mechanical strength.

In contrast, upon use of the living radical polymerization, the synthesis is relatively stable with respect to moisture and oxygen, so that the polymerization reaction will easily progress. In particular, vinyl sulfonic acid or vinyl sulfonic acid derivatives are apt to absorb moisture, which makes it difficult to completely remove the moisture from a reaction system. In use of the living radical polymerization, it is easy to synthesize a polymer having a side chain of a functional group containing Si.

In the present invention, a reversible addition-fragmentation chain transfer (RAFT) polymerization which is one kind of the living radical polymerization is used. The RAFT polymerization is characterized in a wide application range of monomers or polymerization conditions.

In the present invention, the ion exchange capacity is controlled in a range of 1.0 to 3.0 milliequivalent/g by controlling the polymerization conditions and the composition ratios. For the ion exchange capacity of less than 1.0 milliequivalent/g, the ion conductivity becomes low. In use as the fuel cell, the ion conductivity of the electrolyte membrane is decreased to thereby increase the resistance of the fuel cell, which reduces the power generation performance. In contrast, for the ion exchange capacity of more than 3.0 milliequivalent/g, the electrolyte membrane swells largely due to absorption of moisture under the power generation environment, and then is broken at its part around the electrode, which will easily cause the gas cross leak of hydrogen gas and air to drastically reduce the durability of the fuel cell.

In order to improve the durability of the electrolyte membrane, it is effective to decrease the swelling or to improve the tensile strength. From this point, a polyolefin microporous material, or a nonwoven fabric formed of polyolefin, polyester, aramid, cellulose or the like is preferably used. Such a reinforced membrane is called a composite electrolyte membrane. The polyolefin microporous material preferably has an average pore diameter of about 0.3 µm, a porous ratio of about 60 %, and a thickness of about 30 µm by way of example.

An electrolyte membrane electrode assembly (membrane electrode assembly: MEA) is manufactured by sandwiching the electrolyte membrane between the cathode catalyst layer (cathode) for reducing oxidation gas, and the anode catalyst layer (anode) for oxidizing hydrogen. Methods for forming the electrode are not specifically limited, but may include a hot pressing method which involves forming only catalyst layers over the surface of a substrate in advance and performing a hot pressing process on the electrolyte membrane sandwiched between an anode and a cathode. Further, the methods may include a printing method which involves printing directly on the surface of the electrolyte membrane, and a spray method which involves blowing and drying a catalyst paste on the surface of the electrolyte membrane with a spray.

The present invention can provide various types of fuel cells using the above electrolyte for the electrolyte membrane. For example, an oxygen pole is provided on one side of a main surface of the electrolyte film, and a hydrogen pole is provided on the other side thereof to thereby form a polymer electrolyte membrane electrode assembly. Gas diffusion sheets are respectively provided in intimate contact with the oxygen pole and the hydrogen pole. Conductive separators with gas supply passages to the oxygen pole and the hydrogen pole are provided on the outer surfaces of the gas diffusion sheets, so that a single cell of the polymer electrolyte fuel cell can be manufactured.

Further, a portable power supply can be provided which accommodates the above fuel cell body, and a hydrogen cylinder for storing hydrogen to be supplied to the fuel cell body in its container. Additionally, a fuel cell power generator can be provided which includes a reformer for reforming an anode gas containing hydrogen, a fuel cell for generating electricity from the anode gas and a cathode gas containing oxygen, and a heat exchanger for exchanging heat between the high-temperature anode gas discharging from the reformer and the low-temperature fuel gas to be supplied to the reformer. Further, an oxygen pole is provided on one side of a main surface of the electrolyte film, and a methanol pole is provided on the other side thereof to thereby form a polymer electrolyte membrane/ electrode assembly. Gas diffusion sheets are respectively provided in intimate contact with the oxygen pole and the methanol pole. Conductive separators with gas and liquid supply passages to the oxygen pole and the methanol pole are provided on the outer surfaces of the gas diffusion sheets, whereby a single cell of the direct methanol fuel cell can be formed.

In the following, the present invention will be described more in detail by way of example. However, it is understood that the spirit and scope of the present invention is not limited to the disclosed examples.

### [Example 1]

Example 1 is an example in which an electrolyte material produced is a random copolymer.

### (1) Synthesis of Ethyl Ethene Sulfonate

The synthesis of ethyl ethene sulfonate is performed as follows. Ethanol and 2-chloroethane sulfonyl chloride were reacted together in a dichloromethane under pyridine for two hours at 25 °C, so that a vinyl sulfonic acid derivative as a target was obtained.

Specifically, first, a dichloromethane solution of 2-chloroethane sulfonyl chloride was charged into a three-neck flask, and then was stirred at room temperature while the ethanol was added thereto. Then, pyridine was dropped into the solution while being cooled in an ice bath. After the dropping, the solution was stirred at room temperature for two hours. When the reaction was over, then the reaction solution was filtered. The solution was separated by washing three times with 10 % sodium carbonate aqueous solution, one time with distilled water, two times with 1M hydrochloric acid aqueous solution, and two times with distilled water. After an organic phase was extracted and the solvent was decompressed and removed, the solution was refined with distillation to thereby obtain a transparent liquid.

### (2) Synthesis of Electrolyte A as Random Copolymer of Ethyl Ethene Sulfonate and Triethoxy Vinyl Silane

Ethyl ethene sulfonate synthesized in the process (1) of Example 1 and triethoxyl vinyl silane were reacted together to produce the electrolyte A (electrolyte material) as a random copolymer. This process will be described below.

First, ethyl ethene sulfonate, vinyl ethoxy silane, O-ethyl-S-(1-methoxycarbonyl ethyl) dithiocarbonate as a chain transfer agent, and AIBN (2,2-azobis(isobutyronitrile)) as an initiator were put into a polymerization pipe at a mole ratio of 50: 50: 2: 1, and reacted together at 60 °C for 24 hours. After the reaction, the reaction solution was charged into n-hexane and subjected to decantation to thereby produce a viscous material. The molecular weight of the thus-obtained copolymer was 4700 g/mol.

As a deprotection reaction, the copolymer and lithium bromide (whose amount is 5 equivalent amount with respect to 1 equivalent amount of sulfonate) were charged in a recovery flask and refluxed in 2-butanone for 6 hours. Thereafter, the reprecipitation was carried out in the presence of acetic ether, filtered under vacuum, and dried under the reduced pressure, so that the electrolyte A was obtained in the form of a white solid.

### (3) Production of Polymer Electrolyte Membrane B and Properties thereof

Next, a process for manufacturing a polymer electrolyte membrane B from the electrolyte A obtained in the process (2) of Example 1 will be described below.

First, the electrolyte A was dissolved in N-methyl-2-pyrolidone so as to have a concentration of 20 % by weight. The solution was applied and casted over the surface of a glass, and then heated and dried. Then, the specimen was impregnated with sulfuric acid and water, and dried to thereby produce a polymer electrolyte membrane B of 40 µm in thickness.

Properties of the polymer electrolyte membrane B were as follows.

The polymer electrolyte membrane B was impregnated with warm water at 80 °C for 8 hours, which resulted in a rate of change in size of 3 % in the direction of the area. An ion conductivity measured at 10 kHz by using a four-terminal AC impedance method at 80 °C and 90 RH% was 0.10 S/cm.

Additionally, a polyethylene porous membrane or an aramid paper was impregnated with the solution of the electrolyte A obtained in the process (2) of Example 1 and then dried to thereby produce a composite membrane.

### (4) Production of Membrane Electrode Assembly C

First, platinum fine particles were dispersed in 50 % by weight and supported on the surface of a carbon carrier (particles) to form catalyst powder. The catalyst powder and 5 % by weight of poly-perfluorosulfonic acid were dispersed in a mixed solvent of 1-propanol, 2-propanol, and water to thereby produce a slurry. The slurry was applied to the surface of a polytetrafluoro ethylene sheet (PTFE) by screen printing to thereby produce an anode electrode having a thickness of about 20 µm, a width of 30 mm, and a length of 30 mm.

Then, platinum fine particles were dispersed in 50 % by weight and supported on the surface of a carbon carrier to form catalyst powder. The catalyst powder was mixed with a binder which was made by dispersing poly-perfluorosulfonic acid into a mixed solvent of 1-propanol, 2-propanol and water. Then, the mixture was dispersed into the mixed solvent of the water and alcohol to thereby prepare a slurry. The slurry was applied to the surface of a PTFE sheet by the screen printing to thereby produce a cathode electrode having a thickness of about 20 µm, a width of 30 mm, and a length of 30 mm.

The polymer electrolyte membrane B produced in the process (3) of Example 1 was sandwiched between the anode electrode and the cathode electrode, and subjected to hot pressing at 120 °C and 13 MPa to thereby form a membrane electrode assembly C. At that time, the anode electrode and the cathode electrode were bonded together in alignment to superimpose over each other.

### (5) Power Generation Performance of Fuel Cell (PEFC)

Fig. 2 shows an inside structure of a compact power generation cell used for measuring the power generation performance of the membrane electrode assembly C produced in the process (4) of Example 1.

A cell 100 shown in the figure includes a membrane electrode assembly 1 sandwiched between gas diffusion layers 2 and 3, which are held between two pieces of seal members 11. Those elements are sandwiched between separators 4 and 5, which are held between current collectors 6 and 7, and then tightened by and fixed to insulatingmembers 8 and 9. The current collector 6 is provided with a heater 10 for the cell. The gas diffusion layers 2 and 3 for use contain carbon cloth.

Then, the cell 100 was placed in a thermostat bath while the temperature of the bath was controlled such that thermocouples (not shown) inserted into the separators 4 and 5 was at 70 °C.

The anode and cathode were humidified using an external humidifier while the temperature of the humidifier was controlled in a range of 70 to 73 °C such that a dew point around an outlet of the humidifier became 70 °C. The dew point was a value measured by a dew point recorder. In addition, it was confirmed that the dew point determined based on the flow rate, temperature, and pressure of a reaction gas by constantly measuring the amount of consumption of moistening water was a predetermined value. Then, the power was generated at a load current density of 250 mA/cm², a hydrogen utilization of 70 %, and an air utilization of 40 %.

The PEFC using the membrane electrode assembly C had an output of 0.72 V or more, which was stable.

### [Example 2]

Example 2 is an example in which an electrolyte material produced is a block copolymer.

### (1) Synthesis of Polyvinyl Tetra Ethoxy Silane

The synthesis of polyvinyl tetra ethoxy silane was performed as follows. First, vinyl tetra ethoxy silane, O-ethyl-S-(1-methoxycarbonyl ethyl) dithiocarbonate as a chain transfer agent, and AIBN (2,2-azobis(isobutyronitrile)) as an initiator were put into a polymerization pipe at a mole ratio of 50: 2: 1, and reacted together at 60 °C for 24 hours. After the reaction, the reaction solution was dialyzed under acetone to thereby produce a viscous material. The molecular weight of the thus-obtained product was 4200 g/mol.

### (2) Synthesis of Electrolyte D (Electrolyte Material) as Block Copolymer

The polyvinyl tetra ethoxy silane synthesized in the process (1) of Example 2 was used as a macro-chain transfer agent. The neopentyle ethene sulfonate was synthesized in the same way as the process (1) of Example 1 as a vinyl sulfonic acid derivative. Then, the AIBN as an initiator, the micro-chain transfer agent, and the vinyl sulfonic acid derivative were charged into a polymerization pipe at a mole ratio of 0.5: 1: 80, and reacted together at 60 °C for 24 hours. After the reaction, the reaction solution was dialyzed under acetone to thereby produce a viscous material. The thus-obtained product was dried and subjected to the deprotection reaction to thereby produce a white powder (electrolyte D).

### (3) Production of Polymer Electrolyte Membrane E and Properties thereof

Next, the electrolyte D obtained in the process (2) of Example 2 was dissolved in an N-methyl-2-pyrolydone so as to have a concentration of 20 % by weight. The solution was applied and casted over the surface of a glass, and then heated and dried. Next, the specimen was impregnated with sulfuric acid and water, and dried to thereby produce a polymer electrolyte membrane E of 40 µm in thickness.

The properties of the polymer electrolyte membrane E were as follows.

The polymer electrolyte membrane E was impregnated with warm water at 80 °C for 8 hours, which resulted in a rate of change in size of 3 % in the direction of the area. An ion conductivity measured at 10 kHz by using a four-terminal AC impedance method at 80 °C and 90 RH% was 0.15 S/cm.

Additionally, a polyethylene porous membrane or an amide paper was impregnated with the solution of the electrolyte D obtained in the process (2) of Example 2 and then dried to thereby produce a composite membrane.

### (4) Production of Membrane Electrode Assembly F

First, platinum fine particles were dispersed in 50 % by weight and supported on the surface of a carbon carrier (particles) to form catalyst powder. The catalyst powder and 5 % by weight of poly-perfluorosulfonic acid were dispersed in a mixed solvent of 1-propanol, 2-propanol and water to thereby produce a slurry. The slurry was applied to the surface of a polytetrafluoro ethylene sheet (PTFE) by screen printing to thereby produce an anode electrode having a thickness of about 20 µm, a width of 30 mm, and a length of 30 mm.

Platinum fine particles were dispersed in 50 % by weight and supported on the surface of a carbon carrier to form catalyst powder. The catalyst powder was mixed with a binder which was made by dispersing poly-perfluorosulfonic acid into a mixed solvent of 1-propanol, 2-propanol and water. Then, the mixture was dispersed into the mixed solvent of the water and alcohol to thereby prepare a slurry. The slurry was applied to the surface of a PTFE sheet by the screen printing to thereby produce a cathode electrode having a thickness of about 20 µm, a width of 30 mm, and a length of 30 mm.

The polymer electrolyte membrane E produced in the process (3) of Example 2 was sandwiched between the anode electrode and the cathode electrode, and subjected to hot pressing at 120 °C and 13 MPa to thereby form a membrane electrode assembly F. At that time, the anode electrode and the cathode electrode were bonded together in alignment to superimpose over each other.

### (5) Power Generation Performance of Fuel Cell (PEFC)

The power generation performance of the membrane electrode assembly F was measured using the cell 100 shown in Fig. 2 in the same way as Example 1.

The PEFC using the membrane electrode assembly F had an output of 0.73 V or more, which was stable.

### (Comparative Example 1)

### (1) Production of Polymer Electrolyte Membrane G and Properties thereof

A sulfonated polyethersulfone (S-PES) having a number-average molecular weight of 40000 and an ion exchange equivalent weight of 800 g/quivalent (g/meq) was dissolved in an N-methyl-2-pyrolidone so as to have a concentration of 20 % by weight. The solution was applied and casted over the surface of a glass, and then heated and dried. Next, the specimen was impregnated with sulfuric acid and water, and dried to thereby produce a polymer electrolyte membrane G of 40 µm in thickness.

The properties of the polymer electrolyte membrane G were as follows.

The polymer electrolyte membrane G was impregnated with warm water at 80 °C for 8 hours, which resulted in a rate of change in size of 15 % in the direction of the area. An ion conductivity measured at 10 kHz by using a four-terminal AC impedance method at 80 °C and 90 RH% was 0.08 S/cm. This showed that the polymer electrolyte membranes B and E had the small rate of change in size and the high ion conductivity as compared to the polymer electrolyte membrane G.

### (2) Production of Membrane Electrode Assembly H

First, platinum fine particles were dispersed in 50 % by weight and supported on the surface of a carbon carrier (particles) to form catalyst powder. The catalyst powder and 5 % by weight of poly-perfluorosulfonic acid were dispersed in a mixed solvent of 1-propanol, 2-propanol, and water to thereby produce a slurry. The slurry was applied to the surface of a polytetrafluoro ethylene sheet (PTFE) by screen printing to thereby produce an anode electrode having a thickness of about 20 µm, a width of 30 mm, and a length of 30 mm.

Platinum fine particles were dispersed in 50 % by weight and supported by the surface of a carbon carrier to form catalyst powder. The catalyst powder was mixed with a binder which was made by dispersing poly-perfluorosulfonic acid into a mixed solvent of 1-propanol, 2-propanol and water. Then, the mixture was dispersed into a mixed solvent of water and alcohol to thereby prepare a slurry. The slurry was applied to the surface of a PTFE sheet by the screen printing to thereby produce a cathode electrode having a thickness of about 20 µm, a width of 30 mm, and a length of 30 mm.

The polymer electrolyte membrane G produced in the process (1) of Comparative Example 1 was sandwiched between the anode electrode and the cathode electrode, and subjected to hot pressing at 120 °C and 13 MPa to thereby form a membrane electrode assembly H. At that time, the anode electrode and the cathode electrode were bonded together in alignment to superimpose over each other.

### (3) Power Generation Performance of Fuel Cell (PEFC)

The power generation performance of the membrane electrode assembly H was measured using the cell 100 shown in Fig. 2 in the same way as Example 1.

The PEFC using the membrane electrode assembly H had an output of 0.70 V. As can be seen from the above result, the membrane electrode assembly C of Example 1 and the membrane electrode assembly F of Example 2 have the high performance as compared to the membrane electrode assembly H.

The present invention can provide the electrolyte material under simple control. The polymer electrolyte membrane obtained by coating the electrolyte material has the high ion conductivity and excellent stability in terms of the physics with a small change in size. The fuel cell to which the membrane electrode assembly using the polymer electrolyte membrane is applied has the improved output characteristics and lifetime.

The present invention can produce the proton conductive polymer electrolyte membrane at low cost with the flexibility, the high ion conductivity, the excellent water resistance, and the small change in size.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. An electrolyte material containing a copolymer including a polyvinyl as a main chain,
the copolymer including a functional group with proton conductivity; and an alkoxide of Si or Ti as side chains.

2. The electrolyte material according to claim 1,
wherein the copolymer is represented by the following chemical formula (1): 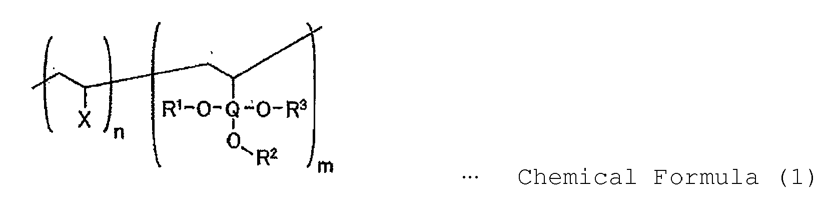 where X is -SO₃H, -COOH or -PO₃H, Q is Si or Ti, each of R¹, R² and R³ is an alkyl group having a carbon number of 1 to 4 which is a straight or branched chain, and each of m and n is an integer number.

3. The electrolyte material according to claim 1 or 2,
wherein the copolymer is a block copolymer.

4. The electrolyte material according to claim 1 or 2,
wherein the copolymer is a random copolymer.

5. The electrolyte material according to any one of claims 1 to 4,
wherein an ion exchange capacity is in a range of 1.0 to 3.0 meq/g.

6. A proton conductive polymer electrolyte membrane containing the electrolyte material according to any one of claims 1 to 5.

7. A proton conductive polymer electrolyte membrane containing a polymer porous material; and the electrolyte material according to any one of claims 1 to 5 impregnated thereinto.

8. A proton conductive polymer electrolyte membrane containing a nonwoven fabric; and the electrolyte material according to any one of claims 1 to 5 impregnated thereinto.

9. A membrane electrode assembly comprising:
a cathode catalyst layer which reduces an oxidation gas,
an anode catalyst layer which oxidizes hydrogen, and
the proton conductive polymer electrolyte membrane according to any one of claims 6 to 8,
wherein the proton conductive polymer electrolyte membrane is interposed between the cathode catalyst layer and the anode catalyst layer.

10. A polymer electrolyte fuel cell including the proton conductive polymer electrolyte membrane according to any one of claims 6 to 8.
